Europäisches Patentamt

(19) European Patent Office

Office européen des brevets

(11) Publication number: **0 048 630**
**B1**

(12) EUROPEAN PATENT SPECIFICATION

(45) Date of publication of patent specification: **05.09.84**

(51) Int. Cl.³: **C 02 F 3/12, B 01 D 21/00**

(21) Application number: **81304381.7**

(22) Date of filing: **23.09.81**

(54) **Treatment of sewage.**

(30) Priority: **24.09.80 GB 8030817**

(43) Date of publication of application:
**31.03.82 Bulletin 82/13**

(45) Publication of the grant of the patent:
**05.09.84 Bulletin 84/36**

(84) Designated Contracting States:
**AT BE CH DE FR IT LI LU NL SE**

(56) References cited:
**BE-A- 867 838**
**DE-A-2 741 142**
**FR-A-1 048 211**
**GB-A-1 247 728**
**GB-A-1 375 458**
**GB-A-1 570 389**

(73) Proprietor: **NEALVANE LIMITED**
**74 The Close**
**Norwich Norfolk (GB)**

(72) Inventor: **Hall, Harold**
**10 Forty Green**
**Marlow Essex (GB)**
Inventor: **Diver, Anthony Raymond**
**17 Regent Road**
**Brightlingsea Essex (GB)**

(74) Representative: **Warden, John Christopher et al**
**R.G.C. Jenkins & Co. 12-15, Fetter Lane**
**London EC4A 1PL (GB)**

Courier Press, Leamington Spa, England.

## Description

The present invention relates to a method of treating sewage and to apparatus which can be used in such a process. The word sewage hereinafter is used to denote any biologically degradeable substrate.

There are currently three main processes for the treatment of sewage by oxidation, which may follow a primary sedimentation stage. The oxidation processes consist of a filtration process, treatment in oxidation ponds, and treatment by extended aeration such as the activated-sludge process.

Treatment in oxidation ponds is a commonly used system but suffers from the drawback that it requires a large acreage and is a slow process.

In the activated sludge process the liquor is maintained turbulent by the injection of air through a variety of air inlet means. Conventional air requirements are 0.8 to 2.0 kg of oxygen per kg of biochemical oxygen demand (B.O.D.) removed. The level of dissolved oxygen (DO) is ideall 2 ppm (parts per million) or higher. By maintaining the microbiological sludge culture in turbulent contact with oxygen from the air, oxidation is more rapid and a typical aeration period is 4 to 8 hours. After aeration the liquor is transferred to a settling tank and after settlement, about 80 to 90 percent of the sludge is returned to the aeration tank. The biological efficiently is such that BOD removal can be of the order of 95 to 98 percent.

Since, however, the volume flow of treated sewage is dependent largely upon the settlement rate, once again considerable capital has to be expanded on large scale tanks or lagoons.

It is known to divide up large scale conventional plants into parallel or sequentially arranged systems to reduce surge problems. In the latter cases, sludge culture is collected separately from secondary settlement tanks and pumped back to the preceding aeration stage or stages. DE—A—2741142 describes a modification of such a process in which an induced current is used to transfer such culture, avoiding the use of pumps, and a buffer to prevent raw sludge passing from a first stage to a second stage.

All such systems rely upon incomplete oxidation and separation between stages, and consequently the build-up of essentially the same biological equilibrium in all aeration zones, which means that discrete stepwise improvement in the level of purity of clean water does not take place.

British Patent Specification 1 375 458 describes apparatus for biologically purifying waste water by using activated sludge comprising in a common enclosure an aeration section and a settling-clarification section communicating with each other so that aerated liquid may flow from the aeration section to the settling-clarification section and activated sludge may be recycled to the aeration section, and means for directing the aerated liquid to the bottom of a set of parallel inclined plates covering substantially the entire settling surface area of the settling clarification section.

The above apparatus contemplates only a single stage oxidation process, which limits the minimum plant size for a given load and also the ultimate purification efficiency.

The invention is mainly directed to reducing the scale and therefore the capital cost of sewage treatment. This has been made possible, in accordance with the invention, by greatly improving the rate of settlement which is the main constraint on the activated sludge process, and at the same time, utilising a plural-stage, continuous through-flow plant so that a much higher performance in terms of plant size can be obtained.

In accordance with one aspect of the invention there is provided a method of treating sewage which comprises sequentially processing the sewage by aeration culture in an aeration zone and passing aerated fluid, in a separation zone, upwardly between inclined lamella separators in a controlled laminar flow in countercurrent to separated sludge culture which is caused to flow down the separators to a collection zone or back to the aeration zone, characterised in that:

(a) the sewage is passed through at least two aeration zones and two separation zones in alternating sequence of aeration and separation, with at least some of the sludge culture flowing back to the preceding aeration zone, the separator and aeration zones being located in a common container in direct communication, there being a continuous flow of fluid at a rate corresponding to the rate of admission of sewage, and

(b) part of the culture separated in an upstream separation zone is transferred directly to an adjacent downstream aeration zone.

There may be any number of aeration and settling zones depending on the population to be served.

It is preferred to cause the fluid to circulate in a vertical plane in the aeration zone so that the current travels downwardly adjacent the separation zone, the lamella separators being inclined upwardly and away from the aeration zone.

The lamella separators may be composed of individual separator plates. The preferred plates, having marginal channels extending in the plane of inclination (when in use) and at least one rib which extends oppositely to the channels (normally upwardly in use) and formed as a V in the plane of the plate so as to extend across the plate. In use the rib will appear as an inverted V so as to direct downwardly flowing sludge in the channels.

The rib preferably meets the channels at/or adjacent the corners of the plate and the rib is preferably convex in cross-section in a direction towards the point of the V and concave in the opposite direction.

Thus each lamella separator can be composed of a number of plates arranged end to end and side to side in a plane and the separators may be stacked parallel at an inclination to the vertical at a distance apart of e.g. 50 mm (or generally 40 to 60 mm). A typical angle of inclination is about 60°.

The separator stacks serve to block the turbulence and provide for laminar flow of liquid through which the sludge readily settles. The sludge has only a comparatively short distance to fall to reach a separator plate where it is effectively out of the circulating flow of fluid. The ribs and channels promote the downward flow of sludge by accumulation and densification and assist in its collection or return to the previous aeration zone.

By using the process of the invention, a series of culture and separation stages can be located in a single elongate tank of relatively small size and since the lamella separators between the aeration sections prevent the free forward movement of culture while permitting the passage of the liquid substrate, the latter can flow directly from one purification stage to the next. Facilities are provided for transferring part of the culture from the primary stage to the secondary stage, in order to provide a completely separate controlled equilibrium in the secondary stage. Normally sludge is wasted only from the final stage, this sludge being well mineralised, very stable and readily separated from its associated water. The sludge production from the inventive process can be 40 or more percent less than in standard activated sludge processing. The process is speeded up by automatic sludge culture return to the previous stage. This completely avoids the use of a conventional settling tank and pump. In the process of the invention the biological loading can be higher than that used in most extended aeration plants, with a corresponding increase in performance and efficiency.

The invention also includes as an aspect apparatus for treating sewage comprising a generally horizontal elongate vessel,

inlet means for admitting sewage at an upstream end of the vessel,

a first aeration zone adjacent the inlet and including air injection means,

a first separation zone downstream of said aeration zone,

said separation zone including an array of stacked lamella separators at an upward inclination away from said aeration zone, and

guide means for directing fluid from said aeration zone upwardly between the lamella separators, characterised by:

a second aeration zone in said vessel downstream of said first separation zone,

means for guiding fluid from the said first separation zone at an upper level into said second aeration zone,

means for injecting air into said second aeration zone,

a second separation zone downstream of said second aeration zone and including an array of stacked lamella separators at an upward inclination away from said aeration zone,

a collection means for collecting sludge culture collected in said separators,

an outlet downstream of said second separation zone for clean effluent, and

means for the controlled loading of the second aeration zone with sludge culture separated in said first separator zone.

An embodiment of the invention is hereafter illustrated by reference to the accompanying drawings, in which:—

Figure 1 is a partly diagrammatic vertical longitudinal section through a sewage treatment tank in accordance with the invention,

Figure 2 is a plan view corresponding to Figure 1,

Figure 3 is a perspective view of a separator plate,

Figure 4 is a partial section along the line IV—IV of Figure 3,

Figure 5 is a partial elevational view along V—V of Figure 1 with the baffle plate removed,

Figure 6 is a view similar to Figure 1 of part of a modified tank, and

Figure 7 is another view similar to Figure 1 of part of a further modification.

In the drawings there is shown a unitary treatment tank 10 which may be constructed of any suitable material such as metal, concrete or glass fiber-reinforced plastics. The illustrated structure is welded or rivetted sheet metal which is inclusive of a floor 11, side walls 24, an inlet end wall 12 an outlet end wall 13 which defines with part of the floor 11 a sludge hopper 14.

A first aeration zone A1 is defined between a curved baffle 15 at a short distance from the inlet wall 12 and a first inclined baffle 16 which is inclined upwardly and forwardly in the direction of through flow of fluid.

A first separation zone S1 is defined between baffle 16 and a parallel-inclined baffle 17.

A short distance downstream of baffle 17 is a second curved baffle 18 and a second aeration zone A2 which is located between the baffle 18 and a second inclined baffle 19, parallel to the baffles 16 and 17 and to the outlet wall 13. A second separation zone S2 is located between the baffle 19 and the end wall 13. The tank is provided with inwardly inclined baffles 20 as splash guards. A sewage inlet pipe 21 enters through the flange 20, from a source 22. The inlet 21 is located between the end wall 12 and the first curve baffle 15. A clean-effluent outlet trough 36 is located at the upper end of outlet wall 13 downstream of zone S2 and connected to an outlet pipe 37.

Under the inlet pipe 21 is a series of air diffusers 23a of conventional type. A second series of air diffusers 23b is located also near the bottom of the tank between baffles 17 and 18.

The curved baffles 15 and 18 extend across the tank between side walls 24 and are curved so as to be concave towards the aeration zones A1, A2. This directs the turbulent flow of agitated fluid caused by the air diffusers 23a and 23b to circulate forwardly near the top of the tank and rearwardly near the bottom so that the circulatory flow is downward adjacent the baffles 16, 19 which define the entries to respective separation zones S1, S2. This ensures that the flow of fluid entering the separation zones is free from turbulence as it passes between the lamella separators which are indicated at 25. The circulation flow is indicated by arrows. Other arrows indicate the flow of fluid between the lamella separators and the downward return of sludge from the separators.

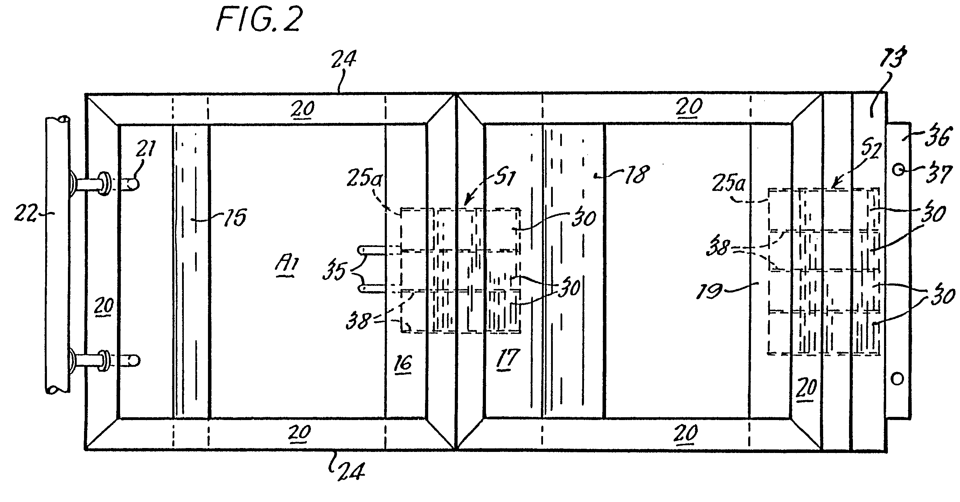

Depending upon the volume of the tank and the through flow, it is not normally necessary for the separator stacks to extend across the full width of the tank and the extent occupied is indicated by the broken lines 25a in Figure 2. The remaining width of the tank is naturally blocked by means not indicated. In the second separation zone S2, it is only necessary for the lamella separators 25 to be stacked in parallel arrangement by means to be described. The returning sludge falls in part directly into the sludge hopper 14 from which it is normally pumped via the pump P through transfer line 26 to disposal. Part of the sludge will return directly into circulation in zone A2.

A pipe or pipes 27, which may contain valves 28 provide communication between the aeration zones A1 and A2 to allow the loading of the zone A2 with activated sludge culture from zone A1.

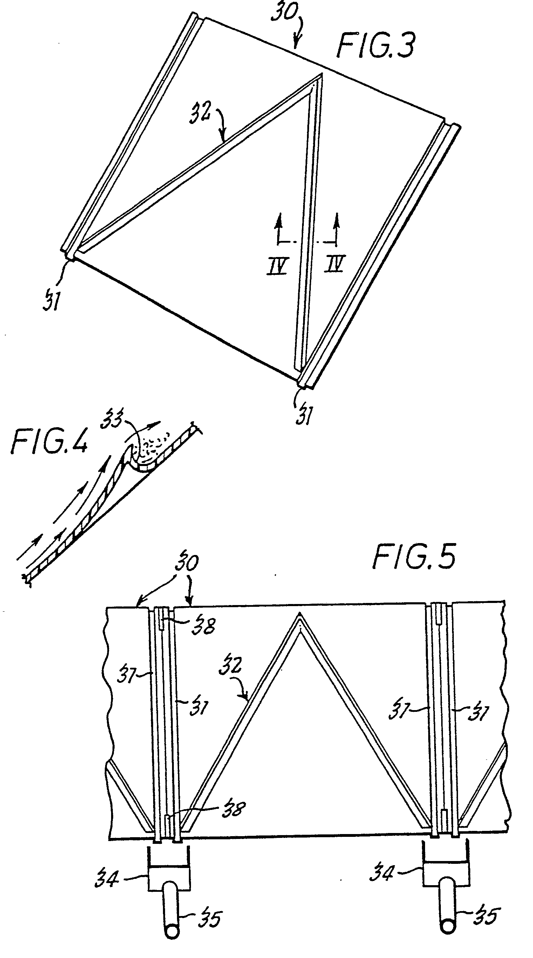

The lamella separators 25 may, in general, be of any form of sheet material. The preferred separators are composed of a series of separator plates, a typical plate being indicated at 30 in Figures 3, 4 and 5. Depending upon the area required for each lamella separator, single plates may be used or they may be attached end to end and side to side in a plane to constitute the separator. Each plate 30 is preferably formed by vacuum-forming a sheet of thermoplastic material so that it contains a pair of marginal channels 31 and at least one rib 32 which extends oppositely to the channels and is formed as a V in the plane of the plate so as to extend across the plate to each channel adjacent to corners, as shown in Figure 3. In section the rib 32 (Figure 4) has a convex cross-section in a direction towards the point of the V, to enable the liquid medium to flow past without disturbance, and is preferably concave e.g. semi-cylindrical in the opposite direction to define a small but well defined channel which appears at 33 in Figure 4. This traps the sludge which slides down the plate and directs it into the channels 31 at the corners of the plate. If desired a number of the shaped ribs may be formed in each plates for directing sludge to the channels at different positions.

The plates 30 are mounted by moulded plastics strips 38 each formed with channels at the correct angle and spacing to receive the plate edges.

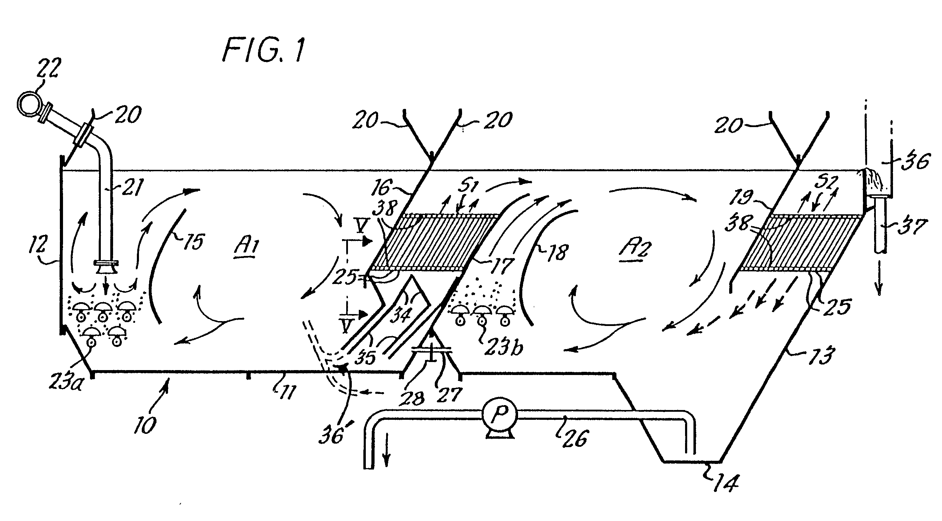

As shown in Figure 5, in the zone S1 of Figure 1 a series of e.g. three plates is located edge to edge in the width-wise direction to form a single lamella separator. A sludge hopper 34 is disposed under each pair of central channels, although these may be omitted if desired as in the zone S2. The sludge hoppers as shown in Figures 1 and 5 are troughs formed e.g. moulded plastics material which are elongate in the plane of Figure 1 and formed with two (as shown) or more V shaped pockets in that plane. Pipes 35 may be attached so as to extend from these pockets and one or more of them may extend to an air injector indicated at 36' in which an air jet is used to blow the sludge back into circulation.

Since the surface of the liquid in the tank 10 is exposed to atmospheric pressure and there is through communication of liquid, the through flow will be dependent upon the rate of input of sewage through the inlet 21.

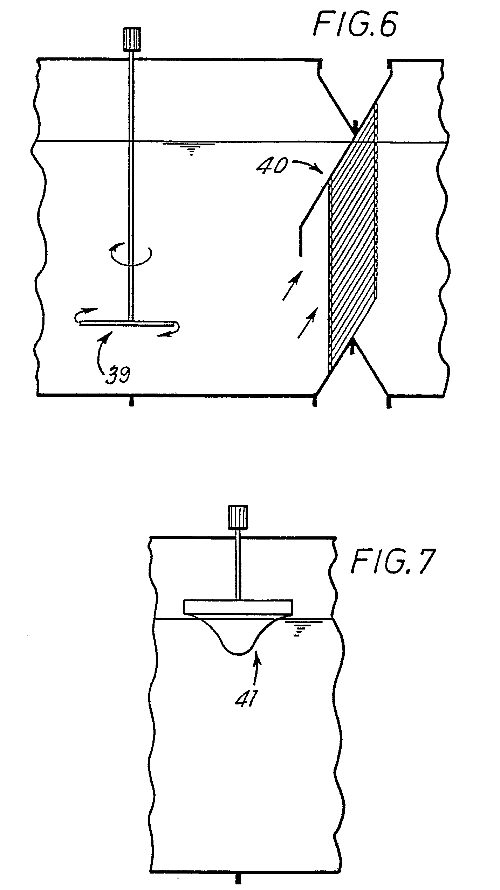

Figure 6 shows a modification of the apparatus of Figure 1 in which a submerged rotating aerating air inlet 39 is used in place of diffuser 23a and/or 23b, together with a vertically arranged stack 40 of lamella separators.

Figure 7 shows a modification of the apparatus of Figure 1 in which a rotating surface aerator 41 is used in place of diffusers 23a and/or 23b.

### Example

In a typical treatment unit, each of two modules defining an aeration zone A1, A2 and an associated diffuser S1, S2 was approximately 6 m × 6 m with a 3.3 m water depth to define a module volume of 119 m³, the total volume being 238 m³. The first set of diffusers 23 consisted of five rows making up a total of 20 diffusers each rated at 3—4 m³/hr air per diffuser. The second section of diffusers 23a, 23b consisted of 20 diffusers in three rows each rated at 3—4 m³/hr air. The oxygen requirement was estimated at 100 Kg/hr and was installed to provide 170 Kg/hr at a peak air supply of 10.6 m³/min.

The first separation zone S1 was provided with three stacks of thirty-one plates and the second separation zone S2 had four stacks of thirty-one plates (Fig. 2), the stacks being arranged as already indicated side-by-side, width-wise. (it will be appreciated that it is possible to stack the plates or lamella separators vertically at the same inclination rather than horizontally as shown in Figure 1). Each plate was 1.1 m long by 0.7 m wide and the separation distance was 50 mm.

The plant was designed to serve a population of 2500. The mean flow of sewage was 625 m³/day (26 m³/hr) and the peak flow was 78 m³/hr (1.3 m³/min). The plant was served with sewage as received after simply passing through a 5 mm filter screen. The designed BOD load was 138 Kg/day and the final effluent had a BOD (biological oxygen demand) not greater than 12 mg/l and a TSS (total suspended solids) not greater than 15 mg/l. Ammonia, calculated as N was up to 8 mg/l.

The valve (28) was adjusted to provide a continuous loading of aeration zone A2 with sludge culture from separation zone S1.

It will be appreciated that in terms of the volume of unit plant per population served, this represents a very great improvement on existing activated sludge plants.

Apparatus for this purpose and related purposes may comprise apparatus for separating sludge from dispersions comprising a container, at least one stack of lamella separators, constituted of plates as hereinbefore described, arranged within the container so as to lie at an angle to the vertical, a plurality of hoppers arranged to collect the sludge from the marginal channels of the lamella separators, inlet means arranged to diffuse dispersion liquid into the container in a region below the separators, and a sludge sump and means for conducting accumulated sludge from the hoppers to the sump.

## Claims

1. A method of treating sewage which comprises sequentially processing the sewage by aeration culture in an aeration zone (A1) and passing aerated fluid, in a separation zone (S1), upwardly between inclined lamella separators (25) in a controlled laminar flow in countercurrent to separated sludge culture which is caused to flow down the separators to a collection zone or back to the aeration zone, characterised in that:

(a) the sewage is passed through at least two aeration zones (A1, A2) and two separation zones (S1, S2) in alternating sequence of aeration and separation, which at least some of the sludge culture flowing back to the preceding aeration zone, the separator and aeration zones being located in a common container (10) in direct communication, there being a continuous flow of fluid at a rate corresponding to the rate of admission of sewage, and

(b) part of the culture separated in an upstream separation zone (S1) is transferred directly to an adjacent downstream aeration zone (A2).

2. A method according to claim 1 characterised in that the fluid is caused to circulate in a vertical plane in the aeration zones (A1, A2) so that the current travels downwardly adjacent the separation zones, the lamella separators (25) being inclined upwardly and away from the aeration zones and being formed to direct the separated solids laterally out of the path of the liquid flow.

3. Apparatus for treating sewage comprising a generally horizontal elongate vessel (10).

inlet means (20) for admitting sewage at an upstream end of the vessel,

a first aeration zone (A1) adjacent the inlet and including air injection means (23a).

a first separation zone (S1) downstream of said aeration zone (A1),

said separation zone (S1) including an array of stacked lamella separators (25) at an upward inclination away from said aeration zone, and

guide means (16) for directing fluid from said aeration zone upwardly between the lamella separators, characterised by:

a second aeration zone (A2) in said vessel downstream of said first separation zone (S1),

means (17) for guiding fluid from said first separation zone (S1) at an upper level into said second aeration zone,

means (23b) for injecting air into said second aeration zone,

a second separation zone (S2) downstream of said second aeration zone (A2) and including an array of stacked lamella separators (38) at an upward inclination away from said aeration zone,

a collection means (34, 35) for collecting sludge culture collected in said separators,

an outlet (36, 37) downstream of said second separation zone (S2) for clean effluent, and

means (27, 28) for the controlled loading of the second aeration zone (A2) with sludge culture separated in said first separation zone (S1).

4. Apparatus according to claim 3 including means (35, 36) for redirecting sludge culture collected on said separators back to said first aeration zone.

5. Apparatus according to claim 3 or claim 4 characterised in that the lamella separators (25, 38) are composed of individual plates (30) having marginal channels (31) extending in the plane of inclination and at least one upward rib (32) formed as an inverted V in the plane of the plate so as to direct sludge to the channels.

6. Apparatus according to claim 5 wherein the said rib (32) is convex in cross-section in a direction towards the point of the V and concave in the opposite direction.

7. Apparatus according to any of claims 3 to 6 including means (15, 18) ensuring a vertical circulation of fluid in each aeration zone (A1, A2) so that fluid travels in a downward direction past the associated downstream separation zone.

## Patentansprüche

1. Verfahren zur Abwasseraufbereitung, das aufeinanderfolgend umfaßt Behandlung des Abwassers durch Belüftung einer Kultur in einer Belüftungszone (A1) und Führung eines belüfteten Fluids in einer Trennzone (S1) zwischen einer geneigten Lamellentrenneinrichtung zu einer Sammlungszone Laminarströmung im Gegenstrom zur getrennten Schlammkultur nach oben, die die Trenneinrichtung zu einer Sammlungszone nach unten oder zurück zur Belüftungszone fließt, dadurch gekennzeichnet, daß

(a) das Abwasser durch mindestens zwei Belüftungszonen (A1, A2) und zwei Trennzonen (S1, S2) in abwechselnder Reihenfolge von Belüftung und Trennung geführt wird, wobei zumindest ein Teil der Schlammkultur zur vorangehenden Belüftungszone zurückfließt, die Trenn- und Belüftungszonen in direkter Verbindung in einem gemeinsamen Behälter (10) untergebracht sind, in dem eine kontinuierliche Fluidströmung mit eine Geschwindigkeit herrscht, die der Geschwindigkeit der Zuführung des Abwassers entspricht, und daß

(b) ein Teil der in einer stromauf gelegenen Trennzone (S1) getrennten Kultur direkt zu einer nahen stromab gelegenen Belüftungszone (A2) geführt wird.

2. Verfahren nach Anspruch 1, dadurch gekennzeichnet, daß das Fluid zur Zirkulation in einer vertikalen Ebene in den Belüftungszonen (A1, A2) so gebracht wird, daß der Strom nahe den Trennzonen nach unten geht, wobei die Lamellentrenneinrichtung (25) nach oben und von den Belüftungszonen weggeneigt ist und die getrennten Feststoffe seitlich aus dem Weg der Flüßigkeitsströmung lenkt.

3. Vorrichtung zur Abwasseraufbereitung mit einem im allgemeinem horizontalen länglichen Behälter (10), mit einer Einlaßeinrichtung (20) zur Zuführung des Abwassers an einem stromauf gelegenen Ende des Behälters, mit einer ersten Belüftungszone (A1) neben dem Einlaß, die eine Lufteinspritzeinrichtung (23a) umfaßt, mit einer ersten Trennzone (S1) stromab der Belüftungszone (A1), wobei die Trennzone (S1) eine Anordnung aus geschlichteten Lamellentrenneinrichtungen (25) mit einer nach oben gehenden von der Belüftungszone weggerichteten Neigung umfaßt, und mit einer Führungseinrichtung (16), um das Fluid aus der Belüftungszone zwischen der Lamellentrenneinrichtung nach oben zu richten, gekennzeichnet durch eine zweite Belüftungszone (A2) in dem Behälter stromab der ersten Trennzone (S1), durch eine Einrichtung (17) zur Führung des Fluids von der ersten Trennzone (S1) bei einem höheren Niveau in die zweite Belüftungszone, durch eine Einrichtung (23b) zum Einspritzen von Luft in die zweite Belüftungszone, durch eine zweite Trennzone (S2) stromab der zweiten Belüftungszone (A2), die eine Anordnung von geschichteten Lamellentrenneinrichtungen (38) mit einer nach oben gehenden und von der Belüftungszone weg gerichteten Neigung umfaßt, durch eine Sammeleinrichtung (34, 35) zur Aufnahme der in der Trenneinrichtung gesammelten Schlammkultur, durch einen Auslaß (36, 37) stromab der zweiten Trennzone (S2) für sauberen Abfluß, und durch eine Einrichtung (27, 28) für die gesteuerte Beschickung der zweiten Belüftungszone (A2) mit der in der ersten Trennzone (S1) getrennten Schlammkultur.

4. Vorrichtung nach Anspruch 3, mit einer Einrichtung (35, 36) zur Rückführung der in der Trenneinrichtung gesammelten Schlammkultur in die erste Belüftungszone.

5. Vorrichtung nach Anspruch 3 oder 4, dadurch gekennzeichnet, daß die Lamellentrenneinrichtungen (25, 38) aus einzelnen Platten (30) mit Randkanälen (31), die sich in der Ebene der Neigung erstrecken, und mit mindestens einer nach oben gerichteten Rippe (32), die die Form eines umgekehrten V in der Ebene der Platten hat, um den Schlamm zu den Kanälen zu richten, aufgebaut sind.

6. Vorrichtung nach Anspruch 5, wobei die Rippe (32) im Querschnitt in einer Richtung auf die Spitze des V zu konvex und in der entgegengesetzen Richtung konkav ist.

7. Vorrichtung nach einem der Ansprüche 3 bis 6, mit einer Einrichtung (15, 18), die eine vertikale Zirkulation des Fluids in jeder Belüftungszone (A1, A2) so sicherstellt, daß das Fluid hinter der zugeordneten stromab gelegenen Trennzone nach unten strömt.

**Revendications**

1. Procédé de traitement des eaux résiduelles, qui consiste successivement à traiter les eaux résiduelles par une culture avec aération dans une zone d'aération (A1) et à faire passer le fluide aéré, dans une zone de séparation (S1), vers le haut entre des séparateurs inclinés à lamelles (25) et un écoulement laminaire contrôlé, à contre-courant par rapport à la culture sous forme de boues séparées que l'on oblige à s'écouler dans les séparateurs vers une zone collectrice ou à refluer vers la zone d'aération, caractérisé en ce que:

a) l'on fait passer les eaux résiduelles à travers au moins deux zones d'aération (A1, A2) et deux zones de séparation (S1, S2) suivant une séquence alternée d'aération et de séparation, au moins une partie de la culture sous forme de boues revenant à la zone d'aération précédente, les zones de séparation et d'aération étant disposées dans un récipient commun (10) en communication directe, un écoulement continu de fluide ayant lieu à un débit qui correspond au débit d'admission des eaux résiduelles, et

b) l'on transfère une partie de la culture séparée dans une zone de séparation amont (S1) directement dans une zone d'aération adjacente aval (A2).

2. Procédé selon la revendication 1, caractérisé en ce qu'on oblige le fluide à circuler dans un plan vertical dans les zones d'aération (A1, A2) de sorte que le courant progresse vers le bas de manière adjacente aux zones de séparation, les séparateurs à lamelles (25) étant inclinés vers le haut en s'éloignant des zones d'aération et étant formés de manière à diriger les solides séparés latéralement hors du trajet du courant liquide.

3. Appareil pour le traitement d'eaux résiduelles comprenant un récipient allongé sensiblement horizontal (10);

des moyens d'admission (20) pour introduire les eaux résiduelles à une extrémité amont du récipient;

une première zone d'aération (A1) adjacente à l'admission et comportant des moyens d'injection d'air (23a);

une première zone de séparation (S1) en aval de ladite zone d'aération (A1);

ladite zone de séparation (S1) comprenant une série de séparateurs à lamelles (25) empilés, inclinés vers le haut en s'éloignant de ladite zone d'aération; et

des moyens de guidage (16) pour diriger le fluide depuis ladite zone d'aération vers le haut entre les séparateurs à lamelles, caractérisé en ce qu'il comprend:

une seconde zone d'aération (A2) disposée dans ledit récipient en aval de ladite première zone de séparation (S1);

des moyens (17) pour guider le fluide depuis un niveau supérieur de ladite première zone de séparation (S1) vers ladite seconde zone d'aération;

des moyens (23b) pour injecter de l'air dans ladite seconde zone d'aération;

une seconde zone de séparation (S2) en aval de ladite seconde zone d'aération (A2) et comprenant une série de séparateurs à lamelles (38) empilés inclinés vers le haut en s'éloignant de ladite zone d'aération;

des moyens collecteurs (34, 35) pour recueillir la culture en forme de boues collectées dans lesdits séparateurs;

une sortie (36, 37) en aval de ladite seconde zone de séparation (S2) pour l'effluent épuré; et

des moyens (27, 28) pour les chargement contrôlé de la seconde zone d'aération (A2) avec la culture en forme de boues séparées dans ladite première zone de séparation (S1).

4. Appareil selon la revendication 2, comprenant des moyens (35, 36) pour retourner la culture en forme de boues recueillie sur lesdits séparateurs vers ladite première zone d'aération.

5. Appareil selon la revendication 3 ou 4, caractérisé en ce que les séparateurs à lamelles (25, 38) sont composés de plaques individuelles (30) pourvues de canaux de bordure (31) s'étendant suivant le plan d'inclinaison et au moins une nervure ascendante (32) en forme de V renversé situé dans le plan de la plaque de manière à diriger les boues vers les canaux.

6. Appareil selon la revendication 5, dans lequel ladite nervure (32) est convexe en section transversale dans la direction vers le pointe du V et concave dans la direction opposée.

7. Appareil selon l'une quelconque des revendications 3 à 6, comprenant des moyens (15, 18) assurant une circulation verticale du fluide dans chaque zone d'aération (A1, A2) de sorte que le fluide progresse vers le bas devant la zone de séparation aval associée.

FIG. 1

FIG.2

FIG.3

30

32

31

31

IV   IV

FIG.4

33

FIG.5

30

38

37

32

31

37   37

38

34   34

35   35

FIG.6

*40*

*39*

FIG.7

*41*

4